# EUROPÄISCHE PATENTSCHRIFT

(11) **EP 1 524 139 B1**
(45) Veröffentlichungstag und Bekanntmachung des Hinweises auf die Patenterteilung: **14.02.2007**
(21) Anmeldenummer: 04021641.8
(22) Anmeldetag: 10.09.2004
(51) Int. Cl.: B60H 1/22, H05B 1/02

(54) **PTC-Zuheizer für ein Kraftfahrzeug**
PTC supplementary heater for a motor vehicle
Chauffage supplémentaire à élément PTC pour véhicules

(30) Priorität: 15.10.2003 DE 10348648
(43) Veröffentlichungstag der Anmeldung: 20.04.2005
(73) Patentinhaber: Behr GmbH & Co. KG, 70469 Stuttgart (DE)
(72) Erfinder: Görner, Wolfgang, 74321 Bietigheim-Bissingen (DE)

(56) Entgegenhaltungen:
- EP-A- 1 349 428
- EP-A- 1 350 647
- DE-A- 10 061 458

## Beschreibung

Die Erfindung betrifft ein Verfahren zum Betreiben eines PTC-Zuheizers, insbesondere für eine Kraftfahrzeug-Heiz- oder -Klimaanlage, gemäß dem Oberbegriff des Anspruchs 1.

Die Verwendung von PTC-Elementen als Zuheizer für Kraftfahrzeug-Heiz- oder -Klimaanlagen ist bekannt, wobei die PTC-Elemente elektrische Energie in Widerstandsabwärme umwandelt. Dabei ist das PTC-Element vor oder hinter einem Heizkörper des Kraftfahrzeug-Kühlkreislaufs angeordnet. Im Normalbetrieb wird die Wärme durch die Luftströmung, abhängig von der Stellung der Luftverteilerklappen und dem Betriebszustand des Gebläses, dem Kraftfahrzeug-Innenraum zugeführt, um diesen zu beheizen. Dabei müssen die Oberflächentemperatur des PTC-Elements sowie die abgestrahlte Wärme in einem zulässigen Bereich gehalten werden, dass die umgebenden Bauteile, insbesondere Kunststoff-Teile, nicht beschädigt werden.

In der DE 100 61 458 A1 wird ein Verfahren zum Stabilisieren der Temperatur einer mit einem PTC-Heizelement arbeitenden elektrischen Heizung beschrieben. Dabei wird der Istwert des durch das PTC-Heizelement fließenden Stroms mit dem Sollwert der Stromstärke, welcher bei dem gewählten PTC-Heizelement durch die gewählte Solltemperatur bestimmt ist, verglichen, und basierend auf dem Ergebnis des Vergleichs die am PTC-Element anliegende Spannung entsprechend angesteuert.

In der EP 1 350 647 A1 wird ein Regelungsverfahren zur Detektion einer Unterbrechung des Luftdurchsatzes durch eine elektrische Heizvorrichtung beschrieben. Bei dem dort beschriebenen Verfahren wird der Istwert des elektrischen Stromes mit einem Vergleichswert der Stromstärke, der unterhalb der minimal einstellbaren Heizleistung der Heizvorrichtung liegt, verglichen. In Abhängigkeit des Ergebnisses des Vergleichs wird die Heizvorrichtung gegebenenfalls aus Sicherheitsgründen abgeschaltet.

In der EP 1 349 428 A2 wird ein Steuerverfahren für einen Heizkörper mit einer Heizeinrichtung vorgeschlagen, bei der die Leistung der Heizeinrichtung in Abhängigkeit vom Istwert einer charakteristischen Temperatur der Heizeinrichtung und einer vorbestimmten Grenztemperatur gesteuert wird. Derartige PTC-Zuheizer lassen noch Wünsche offen.

Es ist Aufgabe der Erfindung, ein verbessertes Verfahren zum Betreiben eines PTC-Zuheizers zur Verfügung zu stellen.

Diese Aufgabe wird gelöst durch ein Verfahren mit den Merkmalen des Anspruchs 1. Vorteilhafte Ausgestaltungen sind Gegenstand der Unteransprüche.

Dazu wird ein Verfahren zum Betreiben eines PTC-Zuheizers vorgeschlagen, wobei eine Regelung des PTC-Zuheizers bezüglich einer Überhitzung durch eine Überwachung des Leistungsverbrauchs erfolgt, wobei der Stromverbrauch über die Zeit ermittelt wird und bei einem starken Abfallen des Stroms und/oder der Leistung in Verbindung mit einem anschließenden Verweilen auf extrem niedrigem Niveau eine Abschaltautomatik ausgelöst wird.

Bei einem PTC-Zuheizer ist eine Regeleinrichtung vorgesehen, welche Messwerte einer Vorrichtung zur Überwachung des Stromverbrauchs auswertet und die Leistungsversorgung des PTC-Zuheizers entsprechend regelt. Bei Verwendung von PTC-Elementen im PTC-Zuheizer mit einer definierten Widerstands-Temperatur-Kennlinie, mit einem positiven Temperatur-Koeffizienten, erübrigt sich die Verwendung von Temperatur-Sensoren zur Überwachung der PTC-Elemente in Hinblick auf eine Überhitzung, da der Strom bzw. die Leistung nach einer extremen Änderung auf einem ebenfalls extremen Niveau verweilt, welches leicht ermittelt werden kann. Die Regeleinrichtung ist relativ preiswert, so dass sich die Kosten für den PTC-Zuheizer nur unwesentlich erhöhen, jedoch denselben vor einer Überhitzung schützen, so dass die Lebensdauer deutlich erhöht und das Risiko einer Überhitzung von benachbarten Teilen oder gar eines Brandes deutlich verringert wird.

Bevorzugt ist eine Überwachung der Spannung an dem oder den PTC-Elementen vorgesehen, welche sicherstellt, dass die Spannung annähernd gleichbleibend ist. Ferner ist bevorzugt eine Bordnetz-Spannungsüberwachung vorgesehen, so dass auch bei der Spannungsüberwachung zu berücksichtigende Veränderungen der Bordnetz-Spannung, welche zu einer Veränderung der an den PTC-Elementen anliegenden Spannung führen, erkannt werden und falsche Abschaltungen in Folge von Spannungsschwankungen ausgeschlossen sind.

Im Folgenden wird die Erfindung anhand eines Ausführungsbeispiels unter Bezugnahme auf die Zeichnung im Einzelnen erläutert. In der Zeichnung zeigen:
- Fig. 1: ein schematisch dargestelltes Diagramm des elektrischen Widerstands (log R) über der Temperatur eines PTC-Elements, und
- Fig. 2: ein schematisch dargestelltes Diagramm der Leistung über der Zeit bei drei verschiedenen Betriebsverläufen.

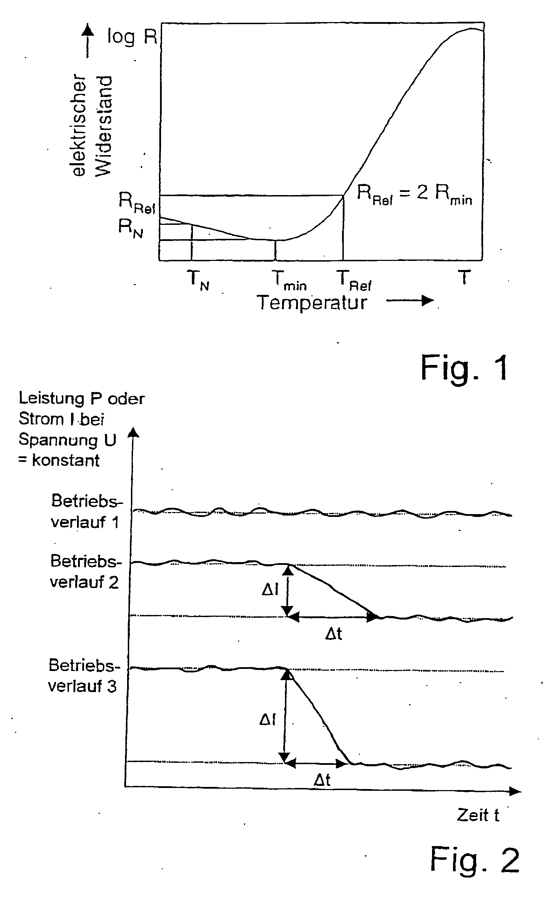

Eine Klimaanlage eines Kraftfahrzeugs weist einen PTC-Zuheizer mit mehreren PTC-Elementen auf, deren Widerstands-Temperatur-Kennlinie in Fig. 1 dargestellt ist. Bei PTC-Elementen handelt es sich um Elemente mit einem positiven Temperatur-Koeffizienten. Ab einer minimalen Temperatur Tₘᵢₙ steigt vorliegend der elektrische Widerstand R mit der Temperatur T an.

In Fig. 2 ist die Leistung P bei vorliegend konstanter Spannung U über der Zeit dargestellt. Da die Leistung P bei konstanter Spannung U proportional zum Strom I ist, entspricht das Diagramm auch dem Strom I über der Zeit t. Im Folgenden werden drei Betriebsverläufe 1, 2 und 3 anhand der Fig. 2 näher erläutert, wobei der Stromverlauf für jeden Betriebsverlauf 1, 2 und 3 rein qualitativ in Hinblick auf seine Änderungen und nicht quantitativ in Hinblick auf die tatsächliche Größe dargestellt ist.

Der Betriebsverlauf 1 stellt einen im Wesentlichen unveränderten Betriebsverlauf dar. Kleine Schwankungen können sich auf Grund von äußeren Bedingungsänderungen, wie Schwankungen der Sonneneinstrahlung, auftreten, jedoch sind diese Änderungen über der Zeit (erste Ableitung) relativ gering.

Der Betriebsverlauf 2 zeigt, ausgehend von einem ersten relativ kontinuierlichen Betriebsverlauf, eine Änderung der Gebläsestufe (Leistung des Gebläses wird vorliegend gesenkt), wodurch der Stromverbrauch der PTC-Elemente gemäß dem vorliegenden Ausführungsbeispiel sinkt, wobei das Absinken über einen gewissen Zeitraum hinweg erfolgt. Anschließend ist wieder ein relativ kontinuierlicher Betriebsverlauf gegeben. Eine entsprechende Änderung ergibt sich bei einer Veränderung einer oder mehrerer Klappenöffnungen im Luftkanal-System, wobei vorliegend die durchströmende Luftmenge verringert wird. Bei einer Erhöhung der den PTC-Zuheizer durchströmenden Luftmenge erfolgt ein Anstieg des Stromverbrauchs und somit der Leistung P über der Zeit t, d.h. die erste Ableitung ändert sich betragsmäßig merklich.

Der Betriebsverlauf 3 zeigt, wiederum ausgehend von einem ersten relativ kontinuierlichen Betriebsverlauf, eine Gebläseabschaltung oder ein Verschließen der Luftkanäle, so dass der PTC-Zuheizer nicht mehr von Luft durchströmt wird. Hierbei ergibt sich die maximal mögliche Veränderung des Stroms I über einem bestimmten Zeitintervall t auf Grund der fehlenden Kühlung durch den Luftstrom, was zu einer Selbsterwärmung führt, die, wie aus Fig. 1 entnommen werden kann, zu einem Anstieg des Widerstands R führt, so dass der Strom I und somit auch die Leistung P bei konstanter Spannung U abnimmt.

Um die PTC-Elemente vor einer Überhitzung und die Klimaanlage vor einer Beschädigung zu schützen, ist eine Regeleinrichtung vorgesehen, welche laufend den Strom I überwacht, wobei sie gleichzeitig als Vorrichtung zur Überwachung des Stromverbrauchs dient, und bei einem extremen Absinken (erste Ableitung negativ und betragsmäßig hoch) und Verweilen auf niedrigem Niveau, wie beim Betriebsverlauf 3, eine Abschaltautomatik tätig wird, so dass für eine gewisse Zeit kein Strom durch die PTC-Elemente strömt und diese nicht weiter erwärmt werden.

Die Abschaltautomatik muss insbesondere dann zum Schutz der Klimaanlage wirksam werden, wenn das sich neu einstellende Temperatur-Widerstands-Gleichgewicht entsprechend der PTC-Auslegung ein derart hohes Temperaturniveau annimmt, dass mit einer Beschädigung gerechnet werden muss. Dies ist insbesondere bei einfachen Heiz-/Klimaanlagen ohne elektrische Einflussmöglichkeiten auf den Gebläse-/Luftweg-Einstellungen der einzig mögliche Schutzmechanismus.

## Patentansprüche

1. Verfahren zum Betreiben eines PTC-Zuheizers, wobei eine Regelung des PTC-Zuheizers bezüglich einer Überhitzung durch eine Überwachung des Leistungsverbrauchs erfolgt, **dadurch gekennzeichnet, dass** der Stromverbrauch über die Zeit ermittelt wird und bei einem starken Abfallen des Stroms (I) und/oder der Leistung (P) in Verbindung mit einem anschließenden Verweilen auf extrem niedrigem Niveau eine Abschaltautomatik ausgelöst wird.

2. Verfahren nach Anspruch 1, **dadurch gekennzeichnet, dass** die Abschaltautomatik ausgelöst wird, wenn sich der Stromabfall über der Zeit einer Kennlinie annähert, die der Kennlinie des oder der verwendeten PTC-Elemente ohne externe Kühlung entspricht.

3. Verfahren nach Ansprüche 1 oder 2, **dadurch gekennzeichnet, dass** der Stromverbrauch überwacht wird.

4. PTC-Zuheizer, insbesondere für eine Kraftfahrzeug-Heiz- oder -Klimaanlage, mit einem oder mehreren PTC-Elementen, welche elektrische Leistung in Wärme umwandeln, und einer Regeleinrichtung, welche Messwerte einer Vorrichtung zur Überwachung des Stromverbrauchs auswertet und die Leistungsversorgung des PTC-Zuheizers entsprechend regelt, **dadurch gekennzeichnet, dass** die Regeleinrichtung ein Verfahren nach einem der Ansprüche 1 bis 3 durchführt.

5. PTC-Zuheizer nach Anspruch 4, **dadurch gekennzeichnet, dass** der PTC-Zuheizer PTC-Elemente mit einer definierten Widerstands-Temperatur-Kennlinie aufweist.

6. PTC-Zuheizer nach einem der Ansprüche 4 bis 5, **dadurch gekennzeichnet, dass** die Leistungsversorgung über die Stromversorgung geregelt ist.

7. PTC-Zuheizer nach einem der Ansprüche 4 bis 6, **dadurch gekennzeichnet, dass** an dem oder den PTC-Elementen eine zumindest während dem Messintervall im Wesentlichen konstante Spannung (U) anliegt.

8. PTC-Zuheizer nach Anspruch 7, **dadurch gekennzeichnet, dass** zusätzlich zur Spannungsüberwachung an dem oder den PTC-Elementen eine Überwachung der Bordnetz-Versorgungsspannung vorgesehen ist.

9. PTC-Zuheizer nach einem der Ansprüche 4 bis 8, **dadurch gekennzeichnet, dass** die Regeleinrichtung eine Abschaltautomatik für den PTC-Zuheizer aufweist.

10. Heiz- oder Klimaanlage, insbesondere für Kraftfahrzeuge, mit zumindest einem Wärmetauscher und zumindest einem Zuheizer, **dadurch gekennzeichnet, dass** ein Zuheizer nach einem der Ansprüche 4 bis 9 ausgebildet und/oder mit einem Verfahren nach einem der Ansprüche 1 bis 3 betrieben wird.

## Claims

1. A process for operating a supplementary PTC heater, said supplementary PTC heater being regulated in respect of over-heating by monitoring power consumption,
**characterised in that**
the current consumption over time is determined and, in the event of a sharp drop in current (I) and/or power (P) in conjunction with subsequent dwelling at an extremely low level, an automatic shut-off device is triggered.

2. A process in accordance with claim 1,
**characterised in that**
the automatic shut-off device is triggered if the drop in current over time approximates a characteristic line corresponding to the characteristic line of the PTC element(s) used without external cooling.

3. A process in accordance with claim 1 or 2,
**characterised in that**
current consumption is monitored.

4. A supplementary PTC heater, in particular for a motor vehicle heating or air conditioning system, having one or more PTC elements which convert electrical power into heat, and a regulating device which evaluates measured values from a device for monitoring current consumption and regulates the power supply to the supplementary PTC heater accordingly,
**characterised in that**
the regulating device carries out a process in accordance with one of claims 1 to 3.

5. A supplementary PTC heater in accordance with claim 4,
**characterised in that**
the supplementary PTC heater has PTC elements with a defined resistance temperature characteristic line.

6. A supplementary PTC heater in accordance with one of claims 4 to 5,
**characterised in that**
the power supply is regulated by the current supply.

7. A supplementary PTC heater in accordance with one of claims 4 to 6, **characterised** i n that
a voltage (U) which is essentially constant at least during the measurement interval is present at the PTC element(s).

8. A supplementary PTC heater in accordance with claim 7,
**characterised in that**
in addition to voltage monitoring at the PTC element(s), onboard power supply monitoring is also provided.

9. A supplementary PTC heater in accordance with one of claims 4 to 8,
**characterised in that**
the regulating device has an automatic shut-off device for the supplementary PTC heater.

10. A heating or air conditioning system, in particular for motor vehicles, having at least one heat exchanger and at least one supplementary heater,
**characterised in that**
a supplementary heater in accordance with one of claims 4 to 9 is designed and/or operated using a process in accordance with one of claims 1 to 3.

## Revendications

1. Procédé pour faire fonctionner un dispositif de chauffage supplémentaire CTP, où une régulation du dispositif de chauffage supplémentaire CTP est réalisée, concernant une surchauffe, par un contrôle de la consommation de puissance, **caractérisé en ce que** la consommation de courant est déterminée sur la durée et, dans le cas d'une forte chute du courant (1) et/ou de la puissance (P), un automate de coupure est déclenché en association, ensuite, avec un maintien prolongé à un niveau extrêmement bas.

2. Procédé selon la revendication 1, **caractérisé en ce que** l'automate de coupure est déclenché lorsque la chute de courant se rapproche, sur la durée, d'une courbe caractéristique qui correspond à la courbe caractéristique de l'élément ou des éléments CTP utilisé(s) sans refroidissement extérieur.

3. Procédé selon la revendication 1 ou 2, **caractérisé en ce que** la consommation de courant est contrôlée.

4. Dispositif de chauffage supplémentaire CTP, en particulier pour un système de chauffage ou de climatisation d'un véhicule automobile, comprenant un ou plusieurs éléments CTP qui transforment une puissance électrique en chaleur, et un dispositif de régulation qui analyse des valeurs mesurées d'un dispositif, pour le contrôle de la consommation de courant, et régule en conséquence l'alimentation en puissance du dispositif de chauffage supplémentaire CTP, **caractérisé en ce que** le dispositif de régulation exécute un procédé selon l'une quelconque des revendications 1 à 3.

5. Dispositif de chauffage supplémentaire CTP selon la revendication 4, **caractérisé en ce que** le dispositif de chauffage supplémentaire CTP présente des éléments CTP ayant une courbe caractéristique définie de la température et de la résistance.

6. Dispositif de chauffage supplémentaire CTP selon la revendication 4 à 5, **caractérisé en ce que** l'alimentation en puissance est régulée par l'alimentation en courant.

7. Dispositif de chauffage supplémentaire CTP selon l'une quelconque des revendications 4 à 6, **caractérisé en ce qu'**une tension (U) pratiquement constante, au moins pendant l'intervalle de mesure, s'applique sur l'élément ou sur les éléments CTP.

8. Dispositif de chauffage supplémentaire CTP selon la revendication 7, **caractérisé en ce que**, en plus du contrôle de la tension sur l'élément ou sur les éléments CTP, il est prévu un contrôle de la tension d'alimentation du réseau de bord.

9. Dispositif de chauffage supplémentaire CTP selon l'une quelconque des revendications 4 à 8, **caractérisé en ce que** le dispositif de régulation présente un automate de coupure pour le dispositif de chauffage supplémentaire CTP.

10. Système de chauffage ou de climatisation, en particulier pour des véhicules automobiles, comprenant au moins un échangeur de chaleur et au moins un dispositif de chauffage supplémentaire, **caractérisé en ce qu'**un dispositif de chauffage supplémentaire est conçu selon l'une quelconque des revendications 4 à 9 et/ou actionné en utilisant un procédé selon l'une quelconque des revendications 1 à 3.
